# EUROPÄISCHE PATENTSCHRIFT

(11) **EP 2 820 745 B1**
(45) Veröffentlichungstag und Bekanntmachung des Hinweises auf die Patenterteilung: **03.08.2016**
(21) Anmeldenummer: 13706265.9
(22) Anmeldetag: 26.02.2013
(51) Int. Cl.: H02K 3/51, H02K 11/00, H02K 29/06

(54) **ROTIERENDE ELEKTRISCHE MASCHINE**
ROTARY ELECTRIC MACHINE
MACHINE ÉLECTRIQUE TOURNANTE

(30) Priorität: 28.02.2012 DE 202012002027 U
(43) Veröffentlichungstag der Anmeldung: 07.01.2015
(73) Patentinhaber: Continental Automotive GmbH, 30165 Hannover (DE)
(72) Erfinder: BULATOW, Michael, 10553 Berlin (DE)
(86) Internationale Anmeldenummer: PCT/EP2013/053802
(87) Internationale Veröffentlichungsnummer: WO 2013/127783

(56) Entgegenhaltungen:
- EP-A1- 2 113 988
- DE-A1- 4 303 480
- US-A- 4 086 519
- US-A- 5 168 202

## Beschreibung

Die vorliegende Erfindung betrifft eine rotierende elektrische Maschine, insbesondere einen Elektromotor oder einen Generator. Ferner wird ein Verfahren zur Herstellung einer rotierenden elektrischen Maschine offenbart.

In modernen Kraftfahrzeugen werden zunehmend Elektromotoren verbaut. Sie werden dabei insbesondere als im Antriebsstrang vollintegrierte Antriebsmotoren oder in Hybridanwendungen beispielsweise auch als Startergeneratoren eingesetzt. Dabei kommen zum Teil fremderregte Synchronmaschinen zum Einsatz, die einen Rotor aus einem mit einer Erregerwicklung versehenen Blechpaket aufweisen.

Zur Regelung des Elektromotors sind in derartigen Elektro- oder Hybridfahrzeugen häufig Drehwinkelsensoren oder Rotorlagegeber (englisch "rotor position sensor", abgekürzt RPS) verbaut, die Drehzahl bzw. Drehwinkel oder Rotorposition erfassen und meist als induktive Sensoren ausgebildet sind. Ein derartiger Sensor bekommt ein Signal von einem Geberrad, das am Rotor befestigt ist und sich mit diesem mitdreht.

Die Druckschrift DE 10 2005 062 865 A1 offenbart einen derartigen Sensor, bei dem der Sensor der auf einem sich mitdrehenden Geberrad angeordneten Sensorspur in axialer Richtung gegenübersteht. Eine solche Anordnung umfasst jedoch eine große Anzahl von einzelnen Bauteilen wie Distanzelemente, Halteelemente, Geberrad, die jeweils Fertigungs- und Einbautoleranzen mitbringen.

Die Druckschrift EP 2 113 988 A1 offenbart einen Rotor für eine rotierende elektrische Maschine, der ein auf einer Rotorwelle angeordnetes Rotorblechpaket, einen in axialer Richtung der Rotorwelle an einem Ende des Rotorblechpaket angeordneten Wuchtring sowie eine in axialer Richtung der Rotorwelle an dem Rotorblechpaket angeordnete Komponente umfasst, die den Wuchtring in radialer Richtung des Rotors festhält.

Die Druckschrift US 4 086 519 A offenbart magnetische Sensorspuren, die auf einer Nabe einer rotierenden Welle aufgebracht sind und mit einem Hall-Sensor zusammenwirken.

Die Druckschrift DE 43 03 480 A1 offenbart einen umrichtergespeisten Asynchronmotor mit einem Polrad, der zur Steuerung des Asynchronmotors dient und einen vierpolig magnetisierten Dauermagnetring enthält.

Aufgabe der Erfindung ist es, eine möglichst einfach aufgebaute und gleichzeitig robuste rotierende elektrische Maschine mit einem Rotorlagegeber anzugeben.

Ferner soll ein ökonomisches Verfahren zur Herstellung einer solchen rotierenden elektrischen Maschine angegeben werden.

Gemäß der Erfindung wird eine rotierende elektrische Maschine angegeben, die einen Rotor mit einem auf einer Rotorwelle angeordneten Rotorblechpaket aufweist. Der Rotor weist zumindest eine das Rotorblechpaket in axialer Richtung der Rotorwelle abschließende Wickelkopfabdeckung auf, wobei die Wickelkopfabdeckung eine Innenseite und eine Außenseite aufweist. Die Außenseite weist eine das Rotorblechpaket in axialer Richtung abschließende Stirnseite und eine das Rotorblechpaket in radialer Richtung abschließende Seitenfläche auf. Auf der Außenseite der Wickelkopfabdeckung ist eine Sensorspur eines Sensors angeordnet. Das Rotorblechpaket weist dabei vorzugsweise eine Erregerwicklung auf.

Diese rotierende elektrische Maschine weist verhältnismäßig wenige Bauteile auf, da für den Sensor kein separates Geberrad vorgesehen ist. Vielmehr wird auf die Wickelkopfabdeckung selbst, die bei derartigen Maschinen mit Erregerwicklungen und gegebenenfalls vergossenen Rotornuten ohnehin vorhanden ist, die Sensorspur aufgebracht.

In einer Ausführungsform ist die Sensorspur auf einer das Rotorblechpaket in axialer Richtung abschließenden Stirnseite der Wickelkopfabdeckung angeordnet. Diese Ausführungsform ist geeignet, wenn ein die Sensorspur in axialer Richtung auslesendes Sensorelement vorgesehen werden soll.

In einer alternativen Ausführungsform ist die Sensorspur auf einer das Rotorblechpaket in radialer Richtung abschließenden Seitenfläche der Wickelkopfabdeckung angeordnet. Diese Ausführungsform ist geeignet, wenn ein die Sensorspur in radialer Richtung auslesendes Sensorelement vorgesehen werden soll.

In einer Ausführungsform ist die Sensorspur im Kaltgasspritzverfahren aufgebracht. Bei diesem Beschichtungsverfahren wird der Beschichtungswerkstoff in Pulverform mit hoher Geschwindigkeit auf eine Unterlage aufgebracht. Die Pulverpartikel werden dabei auf eine so hohe Geschwindigkeit beschleunigt, dass sie auch ohne vorangehendes An- oder Aufschmelzen beim Aufprall auf die Unterlage eine dichte und fest haftende Schicht bilden.

Für die im Kaltgasspritzverfahren aufgebrachte Sensorspur eignen sich verschiedene Materialien. Sie kann insbesondere ein Material aufweisen, das ausgewählt ist aus der Gruppe Kupfer, Aluminium und Stahl.

In einer alternativen Ausführungsform ist die Sensorspur während eines Tiefziehprozesses eingeprägt. Wenn die Wickelkopfabdeckung im Tiefziehverfahren hergestellt wird, kann die Sensorspur ohne großen zusätzlichen Aufwand gleichzeitig gefertigt werden. Dazu wird die Kontur der Sensorspur auf die Außenseite der Wickelkopfabdeckung durchprägt.

Bei dieser Ausführungsform ist die Sensorspur somit aus demselben Material wie die Wickelkopfabdeckung und einteilig mit der Wickelkopfabdeckung ausgebildet.

In einer Ausführungsform weist die Wickelkopfabdeckung eine Legierung auf, wobei die Legierung Eisen, Chrom und Nickel enthält, wobei Chrom in der Legierung mit einem Gewichtsprozent zwischen 18 und 19 (nämlich 18% bis 19%) enthalten ist und Nickel in der Legierung mit einem Gewichtsprozent zwischen 12 und 13 (nämlich 12% bis 13%) enthalten ist.

Beispielsweise weist Wickelkopfabdeckung ein Material auf, das im Wesentlichen die Legierungszusammensetzung Fe_{Rest}CrₐNi_{b}Mn_{c}C_{d}SiₑP_{f}S_{g}Nₕ, also eine Legierungszusammensetzung enthaltend:
- Chrom Cr mit einem Gewichtsprozent a zwischen 18 bis 19,
- Nickel Ni mit einem Gewichtsprozent b zwischen 12 bis 13,
- Mangan Mn mit einem Gewichtsprozent c zwischen 0 bis 1,4,
- Kohlenstoff C mit einem Gewichtsprozent d zwischen 0 bis 0,055,
- Silicium Si mit einem Gewichtsprozent e zwischen 0 bis 0,6,
- Phosphor P mit einem Gewichtsprozent f zwischen 0 bis 0,04,
- Schwefel S mit einem Gewichtsprozent g zwischen 0 bis 0,008,
- Stickstoff N mit einem Gewichtsprozent h zwischen 0 bis 0,1,
- Eisen Fe im restlichen Gewichtsprozent Rest,
aufweist, wobei vorzugsweise bzw. idealerweise gilt: Rest=100-a-b-c-d-e-f-g-h. Daneben kann das Material fertigungstypische Verunreinigungen mit anderen Stoffen aufweisen.

Gegenüber bekannten nicht rostenden Stählen, beispielsweise den Stählen 1. 4301 oder 1.4303 nach Europäischer Norm EN 10020, weist dieses Material einen besonders hohen Anteil an Chrom und Nickel auf. Es hat sich gezeigt, dass Werkstücke aus diesem Stahl auch nach dem Umformen, Stanzen oder Schneiden unmagnetisierbar bleiben. Wirbelstromverluste werden somit reduziert. Dieser Stahl ist daher aufgrund seiner Festigkeit und seiner Unmagnetisierbarkeit besonders für die Wickelkopfabdeckung geeignet.

Eine derartige rotierende elektrische Maschine ist auch für hohe Drehzahlen von 10 000 Umdrehungen pro Minute und mehr geeignet.

In einer Ausführungsform ist die rotierende elektrische Maschine als Elektromotor ausgebildet. Sie kann auch als Generator ausgebildet sein, beispielsweise als Startergenerator, oder sowohl als Motor als auch als Generator betreibbar sein.

Derartige Elektromotoren eignen sich für die Verwendung in einem Kraftfahrzeug. Sie können sowohl als im Antriebsstrang vollintegrierte Antriebsmotoren, beispielsweise als Radnaben- oder Achsmotoren, als auch beispielsweise als Startergeneratoren eingesetzt werden. Gemäß einem Aspekt der Erfindung wird deshalb ein Kraftfahrzeug angegeben, das den beschriebenen Elektromotor aufweist. Das Kraftfahrzeug kann dabei als Elektro- oder Hybridfahrzeug ausgebildet sein.

Ferner wird ein Verfahren zur Herstellung einer rotierenden elektrischen Maschine angegeben, wobei das Verfahren folgendes aufweist:
- Bereitstellen eines Rotorblechpakets mit einer Erregerwicklung;
- Bereitstellen einer Wickelkopfabdeckung, die geeignet ist, das Rotorblechpaket in axialer Richtung abzuschließen, und die eine Innenseite und eine Außenseite aufweist;
- Aufbringen einer Sensorspur eines Sensors auf die Außenseite der Wickelkopfabdeckung.

Das Aufbringen der Sensorspur kann insbesondere im Kaltgasspritzverfahren erfolgen. Es ist auch denkbar, die Sensorspur auf der Außenseite der Wickelkopfabdeckung auf andere Weise aufzubringen. Beispielsweise kann die Sensorspur aus Aluminium, Edelstahl oder Kupfer bzw. Legierungen davon vorgefertigt werden und mittels eines Verbindungsverfahrens wie beispielsweise Punktschweißen, Reibschweißen, Vernieten, Verschrauben, Verstemmen oder Kleben mit der Wickelkopfabdeckung verbunden werden.

Ferner wird ein weiteres Verfahren zur Herstellung einer rotierenden elektrischen Maschine angegeben, wobei das Verfahren folgendes aufweist:
- Bereitstellen eines Rotorblechpakets mit einer Erregerwicklung;
- Herstellen einer Wickelkopfabdeckung im Tiefziehverfahren, wobei die Wickelkopfabdeckung geeignet ist, das Rotorblechpaket in axialer Richtung abzuschließen, und wobei die Wickelkopfabdeckung eine das Rotorblechpaket in axialer Richtung abschließende Stirnseite aufweist;
- Durchprägen einer Sensorspur eines Sensors auf die Stirnseite der Wickelkopfabdeckung während des Tiefziehverfahrens.

Ausführungsbeispiele werden nun anhand der Zeichnungen näher erläutert.
- Figur 1: zeigt schematisch einen Schnitt durch einen Teil eines Rotors einer rotierenden elektrischen Maschine gemäß einer Ausführungsform der Erfindung;
- Figur 2: zeigt schematisch eine perspektivische Ansicht des Rotors gemäß Figur 1;
- Figur 3: zeigt schematisch einen Schnitt durch einen Teil einer Wickelkopfabdeckung gemäß einer ersten Ausführungsform der Erfindung und
- Figur 4: zeigt schematisch einen Schnitt durch einen Teil einer Wickelkopfabdeckung gemäß einer zweiten Ausführungsform der Erfindung.

Gleiche Teile sind in allen Figuren mit denselben Bezugszeichen versehen.

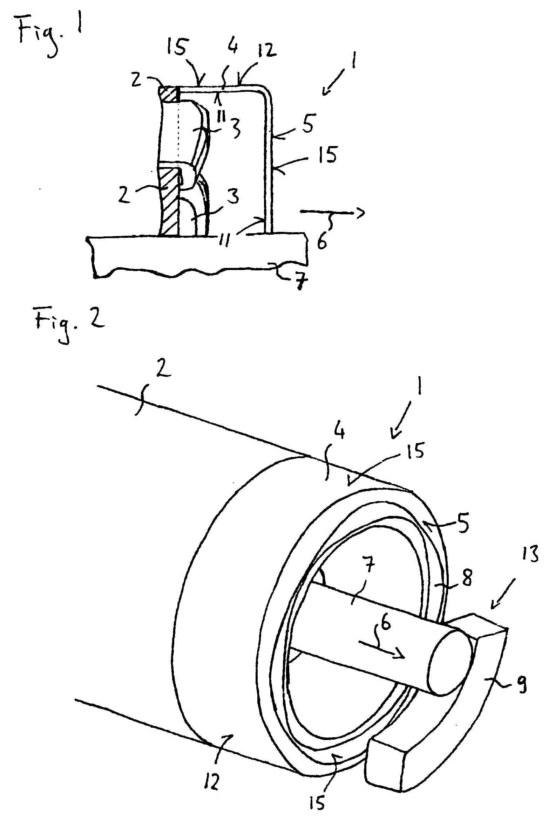

Figur 1 zeigt einen Schnitt durch einen Teil eines Rotors 1 einer rotierenden elektrischen Maschine. Der Stator ist nicht gezeigt.

Die rotierende elektrische Maschine ist in dieser Ausführungsform als fremderregte Synchronmaschine ausgebildet. Ihr Rotor 1 weist ein Rotorblechpaket 2 mit einer Erregerwicklung 3 auf. Die Erregerwicklung 3 ist in nicht gezeigten Nuten des Rotorblechpakets 2 untergebracht, der Nutinnenraum kann ansonsten mit einer Vergussmasse oder einem Tränkharz vergossen sein.

Im Bereich der Wickelköpfe der Erregerwicklung 3 ist eine Wickelkopfabdeckung 4 vorgesehen. Diese umgibt das eine Ende des Rotorblechpakets 2 und die Wickelköpfe der Erregerwicklung 3 und weist eine zentrale Öffnung zur Durchführung der Rotorwelle 7 auf.

Die Wickelkopfabdeckung 4 schließt das Rotorblechpaket 2 in der durch den Pfeil 6 angedeuteten axialen Richtung ab. Sie weist eine dem Rotorblechpaket 2 zugewandte Innenseite 11 und eine vom Rotorblechpaket 2 abgewandte Außenseite 15 auf. Die Außenseite 15 gliedert sich in eine das Rotorblechpaket 2 in axialer Richtung abschließende Stirnseite 5 und in eine das Rotorblechpaket 2 seitlich umgebende und somit in radialer Richtung abschließende Seitenfläche 12.

Figur 2 zeigt eine perspektivische Ansicht des Rotors 1 gemäß Figur 1. In dieser Ansicht ist auch die Rotorwelle 7 gezeigt, mit der das Rotorblechpaket 2 drehfest verbunden ist und die an nicht gezeigten Gehäuseteilen der elektrischen Maschine drehbar gelagert ist.

Ferner ist in Figur 2 ein Rotorlagegeber 13 mit einem Sensorelement 9 gezeigt. Dem Sensorelement 9 steht eine auf der Stirnseite 5 der Wickelkopfabdeckung 4 angeordnete Sensorspur 8 in axialer Richtung, die durch den Pfeil 6 angedeutet ist, gegenüber.

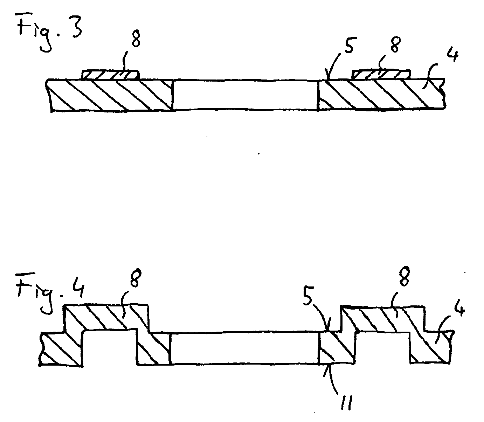

Figur 3 zeigt einen Teil einer Wickelkopfabdeckung 4 mit der Sensorspur 8 gemäß einer ersten Ausführungsform im Schnitt. Bei dieser Ausführungsform ist die Sensorspur 8 im Kaltgasspritzverfahren auf die Stirnseite 5 aufgebracht und besteht aus Kupfer. Es ist auch möglich, für die Sensorspur Aluminium oder Stahl oder Kupfer- bzw. Aluminiumlegierungen zu verwenden. Die Wickelkopfabdeckung 4 besteht aus einem unmagnetisierbaren Stahl mit der Legierungszusammensetzung Fe_{Rest}CrₐNi_{b}Mn_{c}C_{d}SiₑP_{f}S_{g}Nₕ, worin a, b, c, d, e, f, g und h in Gewichtsprozent angegeben sind und 18 ≤ a ≤ 19; 12 ≤ b ≤ 13; 0 ≤ c ≤ 1,4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt.

Figur 4 zeigt einen Teil einer Wickelkopfabdeckung 4 mit der Sensorspur 8 gemäß einer zweiten Ausführungsform im Schnitt. Bei dieser Ausführungsform ist die Sensorspur 8 bei der Herstellung der Wickelkopfabdeckung 4 im Tiefziehverfahren von der Innenseite 11 aus durchgeprägt worden. Bei dieser Ausführungsform bestehen die Wickelkopfabdeckung 4 und die Sensorspur 8 aus demselben Material und sind einteilig ausgebildet. Durch den Tiefziehprozess ist auf der Außenseite 15 der Wickelkopfabdeckung 4 die Sensorspur 8 durchgeprägt.

Obwohl zumindest eine beispielhafte Ausführungsform in der vorhergehenden Beschreibung gezeigt wurde, können verschiedene Änderungen und Modifikationen vorgenommen werden, ohne den Schutzbereich der angefügten Ansprüche zu verlassen.

Ferner wird ein Verfahren zur Herstellung einer rotierenden elektrischen Maschine offenbart, wobei das Verfahren folgendes aufweist:
- Bereitstellen eines Rotorblechpakets 2 mit einer Erregerwicklung 3;
- Bereitstellen einer Wickelkopfabdeckung 4, die geeignet ist, das Rotorblechpaket 2 in axialer Richtung abzuschließen, und die eine Innenseite 11 und eine Außenseite 15 aufweist;
- Aufbringen einer Sensorspur 8 eines Sensors 13 auf die Außenseite 15 der Wickelkopfabdeckung 4.

Zudem wird ein weiteres Verfahren zur Herstellung einer rotierenden elektrischen Maschine offenbart, wobei das Verfahren folgendes aufweist:
- Bereitstellen eines Rotorblechpakets 2 mit einer Erregerwicklung 3;
- Herstellen einer Wickelkopfabdeckung 4 im Tiefziehverfahren, wobei die Wickelkopfabdeckung 4 geeignet ist, das Rotorblechpaket 2 in axialer Richtung abzuschließen, und wobei die Wickelkopfabdeckung 4 eine das Rotorblechpaket 2 in axialer Richtung abschließende Stirnseite 5 aufweist;
- Durchprägen einer Sensorspur 8 eines Sensors 13 auf die Stirnseite 5 der Wickelkopfabdeckung 4 während des Tiefziehverfahrens.

### Bezugszeichenliste

- 1: Rotor
- 2: Rotorblechpaket
- 3: Erregerwicklung
- 4: Wickelkopfabdeckung
- 5: Stirnseite
- 6: Pfeil
- 7: Rotorwelle
- 8: Sensorspur
- 9: Sensorelement
- 11: Innenseite
- 12: Seitenfläche
- 13: Rotorlagegeber
- 15: Außenseite

## Patentansprüche

1. Rotierende elektrische Maschine, die folgende Merkmale aufweist:
- einen Rotor (1) mit einem auf einer Rotorwelle (7) angeordneten Rotorblechpaket (2);
- wobei der Rotor (1) zumindest eine das Rotorblechpaket (2) in axialer Richtung der Rotorwelle (7) abschließende Wickelkopfabdeckung (4) aufweist;
- die Wickelkopfabdeckung (4) eine Außenseite (15) aufweist;
**dadurch gekennzeichnet, dass**
- die Außenseite (15) eine das Rotorblechpaket (2) in axialer Richtung abschließende Stirnseite (5) und eine das Rotorblechpaket (2) in radialer Richtung abschließende Seitenfläche (12) aufweist;
- wobei auf der Außenseite (15) der Wickelkopfabdeckung (4) eine Sensorspur (8) eines Sensors (13) angeordnet ist.

2. Rotierende elektrische Maschine nach Anspruch 1,
wobei die Sensorspur (8) auf der das Rotorblechpaket (2) in axialer Richtung abschließenden Stirnseite (5) der Wickelkopfabdeckung (4) angeordnet ist.

3. Rotierende elektrische Maschine nach Anspruch 1,
wobei die Sensorspur (8) auf der das Rotorblechpaket (2) in radialer Richtung abschließenden Seitenfläche (12) der Wickelkopfabdeckung (4) angeordnet ist.

4. Rotierende elektrische Maschine nach einem der Ansprüche 1 bis 3,
wobei die Sensorspur (8) im Kaltgasspritzverfahren auf der Außenseite (15) der Wickelkopfabdeckung (4) aufgebracht ist:

5. Rotierende elektrische Maschine nach einem der Ansprüche 1 bis 4,
wobei die Sensorspur (8) Kupfer, Aluminium und/oder Stahl enthält.

6. Rotierende elektrische Maschine nach einem der Ansprüche 1 bis 3,
wobei die Sensorspur (8) während eines Tiefziehprozesses auf der Außenseite (15) der Wickelkopfabdeckung (4) eingeprägt ist.

7. Rotierende elektrische Maschine nach einem der Ansprüche 1 bis 6,
wobei die Wickelkopfabdeckung (4) eine Legierung aufweist, wobei die Legierung Eisen, Chrom und Nickel enthält, wobei Chrom mit einem Gewichtsprozent zwischen 18 und 19 in der Legierung enthalten ist und Nickel mit einem Gewichtsprozent zwischen 12 und 13 in der Legierung enthalten ist.

8. Rotierende elektrische Maschine nach Anspruch 7,
wobei die Wickelkopfabdeckung (4) eine Legierungszusammensetzung Fe_{Rest}CrₐNi_{b}Mn_{c}C_{d}SiₑP_{f}S_{g}Nₕ aufweist, worin a, b, c, d, e, f, g und h in Gewichtsprozent angegeben sind und 18 ≤ a ≤ 19; 12 ≤ b ≤ 13; 0 ≤ c ≤ 1,4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt.

9. Kraftfahrzeug mit einer rotierenden elektrischen Maschine nach einem der vorangehenden Ansprüche.

## Claims

1. Rotating electrical machine, which has the following features:
- a rotor (1) comprising a laminated rotor core (2) arranged on a rotor shaft (7);
- the rotor (1) having at least one end-winding cover (4) that closes off the laminated rotor core (2) in the axial direction of the rotor shaft (7);
- the end-winding cover (4) having an outer side (15); **characterized in that**
- the outer side (15) has an end face (5) that closes off the laminated rotor core (2) in the axial direction and a side face (12) that closes off the laminated rotor core (2) in the radial direction;
- a sensor track (8) of a sensor (13) being arranged on the outer side (15) of the end-winding cover (4).

2. Rotating electrical machine according to Claim 1,
the sensor track (8) being arranged on the end face (5) of the end-winding cover (4) that closes off the laminated rotor core (2) in the axial direction.

3. Rotating electrical machine according to Claim 1,
the sensor track (8) being arranged on the side face (12) of the end-winding cover (4) that closes off the laminated rotor core (2) in the radial direction.

4. Rotating electrical machine according to one of Claims 1 to 3,
the sensor track (8) being applied on the outer side (15) of the end-winding cover (4) by the cold gas spraying process.

5. Rotating electrical machine according to one of Claims 1 to 4,
the sensor track (8) containing copper, aluminum and/or steel.

6. Rotating electrical machine according to one of Claims 1 to 3,
the sensor track (8) being stamped in on the outer side (15) of the end-winding cover (4) during a deep-drawing process.

7. Rotating electrical machine according to one of Claims 1 to 6,
the end-winding cover (4) comprising an alloy,
the alloy containing iron, chromium and nickel, chromium being contained in the alloy with a percentage by weight of between 18 and 19 and nickel being contained in the alloy with a percentage by weight of between 12 and 13.

8. Rotating electrical machine according to Claim 7,
the end-winding cover (4) comprising an alloy composition FeᵣₑₘₐᵢₙₑᵣCrₐNi_{b}Mn_{c}C_{d}SiₑP_{f}S_{g}Nₕ, in which a, b, c, d, e, f, g and h are given in percent by weight and 18 ≤ a ≤ 19; 12 ≤ b ≤ 13; 0 ≤ c ≤ 1.4; 0 ≤ d ≤ 0.055; 0 ≤ e ≤ 0.6; 0 ≤ f ≤ 0.04; 0 ≤ g ≤ 0.008 and 0 ≤ h ≤ 0.1.

9. Motor vehicle with a rotating electrical machine according to one of the preceding claims.

## Revendications

1. Machine électrique tournante présentant les caractéristiques suivantes :
- un rotor (1) comportant un noyau feuilleté de rotor (2) disposé sur un arbre de rotor (7) ;
- dans lequel le rotor (1) comporte au moins un gaine de tête d'enroulement (4) délimitant au moins un noyau feuilleté de rotor (2) dans la direction axiale de l'arbre de rotor (7) ;
- le gaine de tête d'enroulement (4) présente une face extérieure (15) ;
**caractérisée en ce que**
- la face extérieure (15) comporte une face avant (5) délimitant le noyau feuilleté de rotor (2) dans la direction axiale et une surface latérale (12) délimitant le noyau feuilleté (2) dans la direction radiale ;
- dans lequel une piste de capteur (8) d'un capteur (13) est disposée sur la face extérieure (15) de la gaine de tête d'enroulement (4).

2. Machine électrique tournante selon la revendication 1, dans laquelle la piste de capteur (8) est disposée sur la face avant (5) de la gaine de tête d'enroulement (4) délimitant le noyau feuilleté (2) dans la direction axiale.

3. Machine électrique tournante selon la revendication 1, dans laquelle la piste de capteur (8) est disposée sur la surface latérale (12) de la gaine de tête d'enroulement (4) délimitant le noyau feuilleté de rotor (2) dans la direction radiale.

4. Machine électrique tournante selon l'une quelconque des revendications 1 à 3,
dans laquelle la piste de capteur (8) est appliquée par un procédé de pulvérisation de gaz froid sur la face extérieure (15) de la gaine de tête d'enroulement (4).

5. Machine électrique tournante selon l'une quelconque des revendications 1 à 4,
dans laquelle la piste de capteur (8) contient du cuivre, de l'aluminium et/ou de l'acier.

6. Machine électrique tournante selon l'une quelconque des revendications 1 à 3,
dans laquelle la piste de capteur (8) est gravée sur la face extérieure (15) de la gaine de tête d'enroulement (4) pendant un processus d'emboutissage.

7. Machine électrique tournante selon l'une quelconque des revendications 1 à 6,
dans laquelle la gaine de tête d'enroulement (4) comporte un alliage, dans lequel l'alliage contient du fer, du chrome et du nickel, dans lequel le chrome est contenu dans l'alliage à raison d'un pourcentage pondéral compris entre 18 et 19 et dans lequel le nickel est contenu dans l'alliage à raison d'un pourcentage pondéral compris entre 12 et 13.

8. Machine électrique tournante selon la revendication 7, dans laquelle la gaine de tête d'enroulement (4) comporte une composition d'alliage Fe_{Rest}CrₐNi_{b}Mn_{c}C_{d}SiₑP_{f}S_{g}Nₕ, où a, b, c, d, e, f, g et h sont indiqués en pourcentage pondéral et dans lequel on a 18 ≤ a ≤ 19 ; 12 ≤ b ≤ 13 ; 0 ≤ c ≤ 1,4 ; 0 ≤ d ≤ 0,055 ; 0 ≤e ≤ 0,6 ; 0 ≤ f ≤ 0,04 ; 0 ≤ g ≤ 0,008 et 0 ≤ h ≤ 0,1.

9. Véhicule automobile comportant une machine électrique tournante selon l'une quelconque des revendications précédentes.
